# FASCICULE DE BREVET EUROPEEN

(11) **EP 0 656 035 B1**
(45) Date de publication et mention de la délivrance du brevet: **07.10.1998**
(21) Numéro de dépôt: 93917499.1
(22) Date de dépôt: 18.08.1993
(51) Int. Cl.: C08L 3/00, B44C 3/04, A63H 33/00

(54) **COMPOSITION DE PATE A MODELER ET PROCEDE DE PREPARATION**
ZUSAMMENSETZUNG FÜR MODELLIERMASSE UND VERFAHREN ZUR HERSTELLUNG
MODELLING PASTE COMPOSITION AND METHOD OF PREPARATION

(30) Priorité: 18.08.1992 CA 2076328
(43) Date de publication de la demande: 07.06.1995
(73) Titulaire: JOUETS BO-JEUX TOYS INC., Anjou, Québec H1J 1H8 (CA)
(72) Inventeur: DESBIENS, Micheline, Montréal, Québec H3M 3A1 (CA)
(74) Mandataire: Vanderperre, Robert
(86) Numéro de dépôt international: CA9300332
(87) Numéro de publication internationale: WO9404609

(56) Documents cités:
- US-A- 3 167 440
- US-A- 4 172 054

## Description

La présente invention concerne une composition de pâte à modeler qui montre l'avantage d'être non toxique, non collante, de ne pas sécher rapidement, de peu givrer et d'être réhumidifiable lorsqu'asséchée. En outre, cette composition est durable, malléable, ne s'émiette pas et ne tache pas. L'invention concerne également un procédé pour la préparation d'une telle composition.

Tout particulièrement, l'invention a trait à l'utilisation d'une sélection particulière d'agents épaississants, anticollants et humidifiants qui permet de conférer à une composition de pâte à modeler à base de farine de grain, de sel et d'eau, des caractéristiques telles qu'elle est non collante, givre peu et a un séchage particulièrement retardé. En outre, on peut réhumidifier cette pâte à modeler lorsque sèche, en la mettant en présence d'eau pendant une période allant de quelques heures à quelques jours pour ainsi lui permettre de recouvrer ses caractéristiques originelles.

Les brevets des Etats-Unis nos. 2,269,509, 2,482,986, 3,167,440, 3,183,108, 4,172,054 et 4,386,964 décrivent tous des compositions de pâte à modeler à base de farine de grain, de sel et d'eau. En particulier, les brevets des Etats-Unis nos. 2,482,986, 3,167,440, 3,183,108, 4,172,054 et 4,386,964 décrivent tous des compositions renfermant en outre un agent épaississant et en particulier le brevet des Etats-Unis no. 4,386,964 vise une composition renfermant en outre un agent épaississant et un agent humidifiant. Toutefois, dans ce dernier cas l'essence de l'invention divulguée réside en une poudre permettant de préparer au besoin une pâte à modeler en ajoutant à cette dernière de l'eau et en chauffant le mélange obtenu pendant 1 à 4 minutes à une température de 40°C à 60°C. Le fait que l'on doive préparer la pâte à modeler au fur et à mesure que l'on en a besoin révèle que celle-ci n'est pas réutilisable lorsqu'asséchée.

Cependant, chacun des brevets ci-dessus mentionnés ne permet pas de réaliser une composition de pâte à modeler à base de farine de grain, d'eau et de sel qui a l'avantage d'être non toxique, non collante, de ne pas sécher rapidement et d'être réhumidifiable lorsqu'asséchée pour ainsi lui permettre de recouvrer ses caractéristiques originelles.

Il existe donc un besoin important pour la réalisation d'une pâte à modeler, notamment d'une pâte à modeler ne renfermant que des ingrédients acceptables d'un point de vue alimentaire, ayant l'avantage d'être durable, malléable, de ne pas s'émietter, de ne pas être collante, de peu givrer et de ne pas sécher rapidement, ce qui permet un usage aisé de la pâte à modeler par des enfants, d'éviter des risques d'intoxications si de très jeunes enfants ingurgitent de la pâte à modeler, d'éviter les désagréments qui sont généralement occasionnés par les pâtes à modeler de l'art antérieur (taches, etc. ...). En outre, cette pâte à modeler a l'avantage de pouvoir être réhumidifiable lorsqu' asséchée, pour lui redonner ses caractéristiques originelles.

Tout particulièrement, la présente invention concerne une composition de pâte à modeler, caractérisée en ce qu'elle résulte de la cuisson d'un mélange comprenant :
- de la farine de grain, de l'eau et du sel;
- un agent épaississant comprenant un mélange d'un produit renfermant 80 % de gluten et 20 % de farine de grain, de fécule de maïs et de crème de tartre dans un rapport volumétrique d'environ 2:1:1;
- un agent anti-moisissure de qualité alimentaire;
- un agent anti-collant à base de silicone liquide de qualité alimentaire, et
- un agent humidifiant à base de lanoline;
lesdits ingrédients étant mélangés les uns aux autres avant ladite cuisson; et du refroidissement et du pétrissage de la pâte obtenue.

Avantageusement, lorsque la pâte à modeler commence ou est sèche au point qu'elle ne peut plus être utilisée, il est possible de la réhumidifier pour lui redonner ses caractéristiques originelles. Pour ce faire, il suffit de mettre la pâte asséchée en présence d'eau, en particulier passer à l'eau ordinaire du robinet pour quelques minutes puis mettre la pâte dans un récipient et à la température de la pièce pour une période allant, selon la quantité de pâte à modeler à réhumidifier, de quelques heures à un jour, puis recommencer le processus jusqu'à ce que la pâte à modeler ait recouvré ses caractéristiques originelles. Par exemple, on peut, de préférence, mettre la pâte à modeler asséchée après l'avoir passée à l'eau dans un récipient étanche, notamment un récipient du type de ceux utilisables pour fins de congélation d'aliments.

L'invention a également pour objet un procédé pour la préparation d'une composition de pâte à modeler telle que définie précédemment. Ce procédé est caractérisé en ce que :
i) on réalise un mélange comprenant :
   - de la farine de grain, de l'eau et du sel;
   - un agent épaississant comprenant un mélange d'un produit renfermant 80 % de gluten et 20 % de farine de grain, de fécule de maïs et de crème de tartre dans un rapport volumétrique d'environ 2:1:1;
   - un agent anti-moisissure de qualité alimentaire;
   - un agent anti-collant à base de silicone liquide de qualité alimentaire, et
   - un agent humidifiant à base de lanoline;
ii) on cuit le mélange obtenu de l'étape i);
iii) on laisse refroidir la pâte obtenue de l'étape ii);
iv) on pétrit la pâte obtenue de l'étape iii).

Avantageusement, les ingrédients sont d'abord réunis en un premier et un second prémélanges, le premier prémélance comprenant tous les ingrédients secs, le second prémélange comprenant tous les ingrédients non contenus dans un premier prémélange, les deux prémélanges étant ensuite réunis pour former le mélange devant être ensuite soumis à la cuisson.

De préférence, l'invention concerne une composition caractérisée en ce que le mélange à cuire comprend :
- de 113,64 à 397,74 cm³ (0,5 à 1,75 tasse) de farine de grain, de 75,00 à 170,46 cm³ (0,33 à 0,75 tasse) de sel ordinaire et fins granules (i.e. du sel de table) et de 113,64 à 340,92 cm³ (0,5 à 1,50 tasse) d'eau;
- un agent épaississant comprenant de 28,41 à 170,46 cm³ (2 cuillères à soupe à 0,75 tasse) d'un produit renfermant 80 % de gluten et 20 % de farine de grain, de 4,73 à 113,64 cm³ (1 cuillère à thé à 0,5 tasse) de crème de tartre et de 4,735 à 113,64 cm³ (1 cuillère à thé à 0,5 tasse) de fécule de maïs, le produit, la crème de tartre et la fécule de maïs étant dans un rapport volumétrique d'environ 2:1:1;
- un agent anti-moisissure de qualité alimentaire, de préférence 1,18 cm³ (0,25 cuillère à thé) de benzoate de sodium;
- de 1,77 à 14,20 cm³ (0,125 à 1 cuillère à soupe) d'un agent anti-collant à base de silicone liquide de qualité alimentaire (par exemple, un agent à base de diméthyl polysiloxane) ;
- de 1,77 à 14,20 cm³ (0,125 à 2 cuillères à soupe) d'un agent humidifiant à base de lanoline.

Avantageusement, l'agent anti-collant à base de silicone liquide de qualité alimentaire est un produit connu sous la marque de commerce SILICONE-426R® (société Rhône-Poulenc®) ou, de préférence un produit connu sous la marque de commerce SILICONE-200 FLUIDE 350 CS FOOD® (société Dow Corning®).

Avantageusement, l'agent humidifiant à base de lanoline est de la lanoline et, de préférence, cette dernière peut jouer en outre le rôle d'un agent épaississant. L'agent humidifiant peut en outre contribuer à faciliter une dispersion homogène des divers constituants de la pâte. De préférence, la lanoline peut être celle vendue sous la marque de commerce AMERCHOL AAA®.

Avantageusement, le produit renfermant 80 % de gluten et 20 % de farine de grain peut être un produit commercial vendu sous la marque de commerce OGILVY®.

Avantageusement, l'eau utilisée peut être de l'eau ordinaire, c'est-à-dire de l'eau du robinet provenant d'un système d'aqueduc municipal.

Avantageusement, la farine de grain peut être celle vendue sous la marque de commerce CSP Foods® (Great Plains, Farine du Boulanger, Saskatoo, Saskatchewan, CANADA).

Il est à signaler que la crème de tartre, le benzoate de sodium et les silicones liquides de qualité alimentaire (i.e. Food Grades) sont des additifs alimentaires bien connus. La lanoline qui est fréquemment utilisée dans le domaine de la cosmétique car rapidement absorbée par la peau, n'est pas connue, à la connaissance de la demanderesse, pour être toxique chez l'homme, même lorsqu'elle est ingérée en des quantités substantielles sans pour autant être énormes.

De façon tout particulièrement préférée, l'invention concerne une composition caractérisée en ce que le mélange à cuire comprend :
- 227,28 cm³ (1 tasse) de farine de grain, 56,82 cm³ (0,25 tasse) de sel ordinaire en fins granules et de 227,28 cm³ (1 tasse) d'eau (de préférence de l'eau du robinet tel que défini précédemment);
- un agent épaississant comprenant 56,82 cm³ (0,25 tasse) d'un produit renfermant 80 % de gluten et 20 % de farine de grain, 28,41 cm³ (2 cuillères à soupe) de crème de tartre et 28,41 cm³ (2 cuillères à soupe) de fécule de maïs;
- 1,18 cm³ (0,25 cuillère à thé) de benzoate de sodium comme agent anti-moisissure;
- 2,36 cm³ (0,5 cuillère à thé) d'un agent anti-collant choisi dans le groupe constitué par les produits connus sous les marques de commerce SILICONE-426R® (société Rhône-Poulenc®) et SILICONE-200 FLUIDE® (société Dow Corning®) ;
- 4,73 cm³ (1 cuillère à thé) de lanoline comme agent humidifiant.

De préférence, l'invention concerne une composition caractérisée en ce que le mélange contient en outre un ou plusieurs additifs usuels pour pâte à modeler, et notamment un ou plusieurs additifs choisis dans le groupe constitué par les colorants et parfums. A titre de parfums on peut par exemple utiliser une ou des huiles essentielles connues pour être de qualité alimentaire. A titre de colorants on peut par exemple utiliser un ou plusieurs des colorants connus pour être de qualité alimentaire.

Avantageusement, on cuit le mélange obtenu de l'étape i) à une température appropriée pour faire gonfler le mélange, par exemple de 29 à 51°C (110 à 150°F) et de préférence environ 43°C (135°F), pour quelques minutes et de préférence de 2 à 4 minutes. De préférence, la cuisson peut être faite dans un réacteur comportant une enveloppe chauffante, par exemple un bain-marie.

La présente invention sera mieux comprise à la lecture de la description qui va suivre d'une partie expérimentale mettant en évidence les avantages de l'invention faisant l'objet de la présente demande de brevet.

Dans les exemples ci-après, les abréviations suivantes ont été utilisées :
- t = tasse (227,28 cm³≈ 8 onces liquides);
- c. à soupe = cuillère à soupe (14,205 cm³≈ ½ once liquide) ;
- c. à thé = cuillère à thé (4,735 cm³≈ 1/6 once liquide) ;
- q.s. = quantité suffisante;
- farine de grain = farine de grain vendue sous la marque de commerce CPS Foods® (Great Plains, Farine du Boulanger, Saskatoo, Saskatchewan, CANADA);
- sel = sel de table en fins granules;
- gluten = gluten vendu sous la marque de commerce OGILVY® et constitué d'un mélange de 80 % de gluten et de 20 % de farine de grain;
- silicone = silicone liquide de qualité alimentaire vendu sous la marque FLUIDE 200® par la compagnie DOW CORNING® et ayant une viscosité de 350 CS;
- lanoline = lanoline vendue sous la marque de commerce AMERCHOL AAA®.

### Exemples de préparation de pâte à modeler

### EXEMPLE 1 (INVENTION) :

Ingrédients :
* 1 t. de farine de grain,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone,
* 1 c. à thé de lanoline,
* q.s. d'huiles essentielles (GIVAUDAN®) et
* q.s. de colorants (DYECO LTD®).

Tout d'abord, on forme deux prémélanges, à savoir un premier consistant en un prémélange de tous les ingrédients secs de la recette, à savoir : la farine de grain, le sel, le gluten, la fécule de maïs, la crème de tartre et le benzoate de sodium; un second prémélange consistant en un mélange d'eau, de silicone liquide, de lanoline, d'huiles essentielles et de colorants. Puis on incorpore chacun des prémélanges dans un mélangeur à haute vitesse pour réaliser une pâte. Ensuite, on récupère la pâte et on la fait cuire pendant environ 2 à 4 minutes à une température d'environ 43°C (135°F) dans un bain-marie pour qu'elle se gonfle, puis on pétrit la pâte obtenue pendant quelques minutes et on obtient une pâte à modeler prête à être utilisée. Cette pâte à modeler a l'avantage ce ne pas être collante, de peu givrer même après quinze jours d'utilisation, et de sécher lentement.

En outre, lorsque l'humidité de l'air ambiant est élevée, le temps de séchage est encore davantage prolongé.

Enfin, advenant que la pâte à modeler soit sèche ou montre des signes d'assèchement après quelques semaines d'utilisation, il suffit de la passer simplement à l'eau du robinet pour quelques minutes et de la mettre dans un récipient étanche et à la température de la pièce pendant une période comprise entre quelques heures et un jour, puis de recommencer le processus autant de fois que nécessaire (e.g. quelques fois) pour lui redonner ses caractéristiques originelles.

Par exemple, un morceau de pâte précédemment obtenue et d'un volume d'environ 114 cm³ (4 onces) a été asséché au point de devenir une masse dure et non malléable. Ce morceau a été passé à l'eau du robinet pour 1 à 2 minutes puis mis dans une boîte étanche pour 1 à 2 heures, à la température de la pièce, et cette opération a été répétée 8 fois. Lorsque la pâte a commencé à devenir malléable, elle a été en outre pétrie lorsque passée sous l'eau du robinet. Après la 8ème fois, la pâte avait recouvré ses caractéristiques originelles.

Afin d'illustrer que l'invention réside dans la sélection particulière des ingrédients définissant l'agent épaississant, à savoir le gluten, la fécule de maïs et la crème de tartre, l'agent non collant, à savoir le silicone liquide et l'agent humidifiant, à savoir de la lanoline, la demanderesse a réalisé les exemples comparatifs suivants en suivant le même processus que celui pour réaliser la pâte à modeler ci-dessus mentionnée.

### EXEMPLE 2 (exemple comparatif) :

Ingrédients :
* 1 t. de farine,
* ¼ t. de sel,
* ¼ t. de gluten,
* ¼ de c. à thé de benzoate de sodium,
* 1 t. d'eau,
* ½ c. à thé de silicone et
* 1 c. à thé de lanoline.

La pâte obtenue montre une texture molle et collante.

### EXEMPLE 3 ( exemple comparatif) :

Ingrédients :
* 1 t. de farine,
* ¼ t. de sel,
* ¼ t. de gluten,
* 2 c. à soupe de crème de tartre,
* ¼ c. à thé de benzoate de sodium,
* 1 t. d'eau,
* ½ c. à thé de silicone et
* 1 c. à thé de lanoline.

La pâte obtenue donne une texture molle et collante.

### EXEMPLE 4 (exemple comparatif) :

### Ingrédients :

* 1 t. de farine,
* ¼ t. de sel,
* ¼ t. de gluten,
* 2 c. à soupe de fécule de maïs,
* ¼ c. à thé de benzoate de sodium,
* 1 t. d'eau,
* ½ c. à thé de silicone et
* 1 c. à thé de lanoline.

La pâte obtenue donne une texture molle et collante.

### EXEMPLE 5 :

Ingrédients :
* 1 t. de farine,
* ¼ t. de sel,
* ½ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone et
* 1 c. à thé de lanoline.

La pâte obtenue donne une texture dure, sèche rapidement et s'émiette.

### EXEMPLE 6 :

Ingrédients :
* 1 t. de farine,
* ¼ t. de sel,
* ¼ t. de gluten,
* 4 c. à soupe de fécule de maïs,
* 2 c. à soupe de crème de tartre,
* ¼ c. à thé de benzoate de sodium,
* 1 t. d'eau,
* ½ c. à thé de silicone et
* 1 c. à thé de lanoline.

La pâte obtenue donne une texture dure, sèche vite et s'émiette facilement.

### EXEMPLE 7 :

Ingrédients :
* 1 t. de farine,
* ¼ t. de sel,
* ¼ t. de gluten,
* 4 c. à soupe de crème de tartre,
* 2 c. à soupe de fécule de maïs,
* ¼ c. à thé de benzoate de sodium,
* 1 t. d'eau,
* ½ c. à thé de silicone et
* 1 c. à thé de lanoline.

La pâte obtenue donne une texture dure, sèche et s'émiette.

### EXEMPLE 8 :

Ingrédients :
* 1 t. de farine,
* ¼ t. de sel,
* ¼ t. de gluten,
* 4 c. à soupe de crème de tartre,
* 4 c. à soupe de fécule de maïs,
* ¼ c. à thé de benzoate de sodium,
* 1 t. d'eau,
* ½ c. à thé de silicone et
* 1 c. à thé de lanoline.

La pâte obtenue donne une texture dure, sèche et s'émiette.

### EXEMPLE 9 :

Ingrédients :
* 1 t. de farine,
* ¼ t. de sel,
* ¼ t. de gluten,
* 2 c. à soupe d'un agent épaississant vendu sous la marque de commerce HI-SILE®,
* 2 c. à soupe de crème de tartre,
* ¼ c. à thé de benzoate de sodium,
* 1 t. d'eau,
* ½ c. à thé de silicone et
* 1 c. à thé de lanoline.

La pâte obtenue sèche très vite et est dure.

En outre, d'autres essais utilisant des quantités supérieures de l'agent épaississant HI-SILE® ont donné les mêmes résultats si ce n'est que la pâte obtenue était encore davantage dure.

### EXEMPLE 10 :

Ingrédients :
* 1 t. de farine,
* ¼ t. de sel,
* ¼ t. de gluten,
* 2 c. à soupe de crème de tartre,
* 2 c. à soupe de fécule de maïs,
* 2 c. à soupe de chlorure de calcium,
* ½ c. à thé de benzoate de sodium,
* 1 t. d'eau,
* ¼ c. à thé de silicone et
* 1 c. à thé de lanoline.

Toutes les recettes faites avec du chlorure de calcium ont donné une texture d'aspect collant, caoutchouteux et sèchent rapidement. En outre, la pâte obtenue présentait des grumeaux blancs et avait une odeur désagréable.

### EXEMPLE 11 (exemple comparatif) :

Ingrédients :
* 1 t. de farine,
* ¼ t. de sel,
* ¼ t. de gluten,
* 2 c. à soupe d'un agent épaississant HI-SILE®,
* 2 c. à soupe de chlorure de calcium,
* ¼ c. à thé de benzoate de sodium,
* 1 t. d'eau,
* ¼ c. à thé de silicone et
* 1 c. à thé de lanoline.

La pâte obtenue était épaisse, collante, séchait vite et comportait des grumeaux blancs et avait une odeur désagréable.

### EXEMPLE 12 (exemple comparatif) :

Ingrédients :
* 1 t. de farine,
* ¼ t. de sel,
* 2 c. à soupe de gluten,
* 2 c. à soupe de crème de tartre,
* 1 c. à thé de gomme de guar,
* ¼ c. à thé de benzoate de sodium,
* 1 t. d'eau,
* ½ c. à thé de silicone et
* 1 c. à thé de lanoline.

La pâte obtenue était collante et séchait vite. En outre, des recettes additionnelles ont été faites avec de la gomme de guar et elles étaient toutes d'aspect collant.

### EXEMPLE 13 :

Ingrédients :
* 1 t. de farine,
* ¼ t. de sel,
* ¼ t. de gluten,
* 2 c. à soupe de crème de tartre,
* 2 c. à soupe de fécule de maïs,
* 1 c. à soupe de sucre,
* ¼ c. à thé de benzoate de sodium,
* 1 t. d'eau,
* ¼ c. à thé de silicone et
* 1 c. à thé de lanoline.

La pâte obtenue avait un aspect collant et séchait vite.

### EXEMPLE 14 :

Ingrédients :
* 1 t. de farine,
* ¼ t. de sel,
* ¼ t. de gluten,
* 2 c. à soupe de crème de tartre,
* 2 c. à soupe de fécule de maïs,
* ½ c. à thé d'amaranthe,
* ¼ c. à thé de benzoate de sodium,
* 1 t. d'eau,
* ½ c. à thé de silicone et
* 1 c. à thé de lanoline.

La pâte obtenue avait des couleurs non uniformes et séchait vite.

### EXEMPLE 15 :

Ingrédients :
* 1 t. de farine,
* ¼ t. de sel,
* ¼ t. de gluten,
* 2 c. à soupe de crème de tartre,
* 2 c. à soupe de fécule de maïs,
* 2 c. à soupe de NYTHAL 300® (marque de commerce),
* ¼ c. à thé de benzoate de sodium,
* 1 t. d'eau,
* ½ c. à thé de silicone et
* 1 c. à thé de lanoline.

La pâte obtenue séchait rapidement et avait un aspect fluide.

### EXEMPLE 16 :

* 1 t. de farine,
* ¼ t. de sel,
* ¼ t. de gluten,
* 2 c. à soupe de fécule de maïs,
* 2 c. à soupe de crème de tartre,
* 1 c. à soupe de bicarbonate de calcium,
* ¼ c. à thé benzoaze de sodium,
* 1 t. d'eau,
* ½ c. à thé de silicone et
* 1 c. à thé de lanoline.

La pâte obtenue était molle, collante et séchait rapidement. En outre, d'autres recettes effectuées avec des variations différentes de bicarbonate de calcium PULPRO H 30 ®ont donné des résultats similaires.

### EXEMPLE 17 :

Ingrédients :
* 1 t. de farine,
* ¼ t. de sel,
* ¼ t. de gluten,
* 2 c. à soupe de crème de tartre,
* 2 c. à soupe de fécule de maïs,
* 2 c. à soupe de PULPRO H30® (craie) (marque de commerce),
* ¼ c. à thé de benzoate de sodium,
* 1 t. d'eau,
* ½ c. à thé de silicone et
* ¼ c. à thé de lanoline.

La pâte obtenue était liquide et collante. Des essais additionnels avec des quantités différentes de PULPRO H30® ont donné les mêmes résultats.

### EXEMPLE 18 :

Ingrédients :
* 1 t. de farine,
* ¼ t. de sel,
* ¼ t. de gluten à 30 % de gluten et 70 % de farine,
* 2 c. à soupe de crème de tartre,
* 2 c. à soupe de fécule de maïs,
* ¼ c. à thé de benzoate de sodium,
* 1 t. d'eau,
* ½ c. à thé de silicone et,
* 1 c. à thé de lanoline.

La pâte obtenue sèche très vite et s'émiette.

Les exemples 19 à 40 ci-après ont pour objet d'y montrer l'effet synergisant de l'utilisation de la lanoline en combinaison avec un agent à base de silicone fluide et des trois agents liants objets de l'invention, à savoir : le gluten, la crème de tartre et la fécule de maïs.

### EXEMPLE 19 :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau.
* ½ c. à thé de silicone,
* 1 c. à thé de lanoline et
* 1 c. à soupe d'huile du type huile pour bébé.

La pâte obtenue sèche très vite et a un caractère huileux.

### EXEMPLE 20 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 1 c. à soupe d'huile végétale et
* 1 c. à thé de silicone.

La pâte obtenue sèche très vite et a un caractère huileux.

### EXEMPLE 21 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau et
* 1 c. à soupe d'huile végétale.

La pâte obtenue sèche très vite, est huileuse et s'émiette.

### EXEMPLE 22 (exemple comparatif) :

Ingrédients :
* 1. t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone et
* 1 c. à thé d'un produit vendu sous la marque de commerce GLUCAM 10®

La pâte obtenue est collante et sèche très vite. En outre, peu importe les quantités de GLUCAM 10® utilisées, la pâte obtenue reste collante et sèche rapidement.

### EXEMPLE 23 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau et
* 1 c. à thé de lanoline.

La pâte est collante et sèche rapidement.

### EXEMPLE 24 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau et
* 2 c. à soupe de propylène glycol.

La pâte obtenue est un peu collante et sèche.

### EXEMPLE 25 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 tasse d'eau et
* 1 c. à soupe de silicone.

La pâte obtenue sèche rapidement et s'émiette.

### EXEMPLE 26 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 1 c. à soupe de silicone et
* 1 c. à soupe de CARBOWAX 400®.

La pâte obtenue sèche rapidement et est collante.

### EXEMPLE 27 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau et
* 1 c. à soupe de INDOPOL H35®.

La pâte obtenue sèche rapidement et est collante.

### EXEMPLE 28 ( exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 1 c. à soupe de INDOPOL H35® et
* ½ c. à thé de silicone.

La pâte obtenue sèche vite et est collante.

### EXEMPLE 29 :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 1 c. à soupe de INDOPOL H35®,
* ¼ c. à thé de silicone et
* 1 c. à thé de lanoline.

La pâte obtenue est collante et sèche rapidement.

### EXEMPLE 30 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 2 c. à soupe de propylène glycol et
* ½ c. à thé de silicone.

La pâte obtenue est collante et sèche rapidement.

### EXEMPLE 31 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à soupe de propylène glycol,
* ¼ c. à soupe d'huile végétale et
* ½ c. à thé de silicone.

La pâte obtenue est collante, huileuse, sèche rapidement et givre.

### EXEMPLE 32 (exemple comparatif) :

Ingrédients :
* 1 t. de farine,
* ¼ t. de sel,
* ¼ t. de gluten,
* 2 c. à soupe de crème de tartre,
* 2 c. à coupe de fécule de maïs,
* ¼ c. à thé de benzoate de sodium,
* 1 t. d'eau,
* 2 c. à soupe d'aloès vera,
* 1 c. à soupe d'huile végétale et
* ½ c. à thé de silicone.

La pâte obtenue est collante, sèche et s'émiette.

### EXEMPLE 33 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone, et
* ½ c. à soupe de propylène glycol.

La pâte obtenue est collante, sèche rapidement et s'émiette.

### EXEMPLE 34 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone et
* ½ c. à soupe de Lanogène® (polyoxyéthylène de Hoechst AG®).

La pâte obtenue est collante, sèche et a une mauvaise odeur.

### EXEMPLE 35 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 1 c. à soupe d'INDOPOL-14® et
* ½ c. à thé de silicone.

La pâte obtenue est collante et sèche.

### EXEMPLE 36 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* 1 c. à soupe d'huile végétale et
* 1 c. à soupe d'ANTI-FOAM SILICONE Y30®.

La pâte obtenue a une mauvaise odeur, est sèche et est d'apparence huileuse.

### EXEMPLE 37 :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ¼ c. à thé de ANTI-FOAM SILICONE C® et
* ¼ c. à thé de lanoline.

La pâte obtenue a une mauvaise odeur et sèche rapidement.

### EXEMPLE 38 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone et
* 2 c. à thé de cire d'abeille.

La pâte obtenue est marbrée, dure et sèche.

### EXEMPLE 39 :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ¼ c. à thé de ANTI-FOAM SILICONE 1500® et
* 1 c. à thé de lanoline.

La pâte obtenue sèche rapidement.

### EXEMPLE 40 (exemple comparatif) :

Ingrédients :
* 1 t. de farine,
* ¼ t. de sel,
* ¼ t. de gluten,
* 2 c. à soupe de crème de tartre,
* 2 c. à soupe de fécule de maïs,
* ¼ c. à thé de benzoate de sodium,
* 1 t. d'eau,
* ½ c. à thé de silicone et
* 1 c. à soupe de SORBITOL.

La pâte obtenue donne une texture collante et se cristallise en séchant rapidement. Les recettes additionnelles faites avec du SORBITOL en quantités différentes ont donné le même résultat.

En conclusion, à la lumière de ce qui précède, il ressort que seule la sélection des ingrédients particuliers faisant l'objet de la présente demande de brevet permet d'arriver à une pâte à modeler non-toxique, qui n'est pas collante, qui ne sèche pas rapidement, qui givre peu, ne tache pas, qui est durable et peut être manipulée aisément par des enfants et peut, si désiré, être réhumidifiée pour retrouver ses caractéristiques originelles et être utilisée de nouveau.

Bien entendu, tous les ingrédients secs ci-dessus mentionnés sont utilisés sous la forme de poudre ou granules afin de permettre leur mesure à l'aide d'une tasse, d'une cuillère à soupe et d'une cuillère à thé.

## Revendications

1. Composition de pâte à modeler, caractérisée en ce qu'elle résulte de la cuisson d'un mélange comprenant :
- de la farine de grain, de l'eau et du sel ;
- un agent épaississant comprenant un mélange d'un produit renfermant 80 % de gluten et 20 % de farine de grain, de fécule de maïs et de crème de tartre dans un rapport volumétrique d'environ 2:1:1 ;
- un agent anti-moisissure de qualité alimentaire ;
- un agent anti-collant à base de silicone liquide de qualité alimentaire, et
- un agent humidifiant à base de lanoline ;
lesdits ingrédients étant mélangés les uns aux autres avant ladite cuisson; et du refroidissement et du pétrissage de la pâte obtenue.

2. Composition telle que définie à la revendication 1, caractérisée en ce que les ingrédients sont d'abord réunis en un premier et un second prémélanges, le premier prémélange comprenant tous les ingrédients secs, le second prémélange comprenant tous les ingrédients non contenus dans le premier prémélange, les deux prémélanges étant ensuite réunis pour former le mélange devant être successivement soumis à la cuisson.

3. Composition telle que définie à la revendication 2, caractérisée en ce que le mélange à cuire comprend :
- de 113,64 à 397,74 cm³ (0,5 à 1,75 tasse) de farine de grain, de 75,00 à 170,46 cm³ (0,33 à 0,75 tasse) de sel et de 113,64 à 340,92 cm³ (0,5 à 1,50 tasse) d'eau ;
- un agent épaississant comprenant de 28,41 à 170,46 cm³ (2 cuillères à soupe à 0,75 tasse) d'un produit renfermant 80 % de gluten et 20 % de farine de grain, de 4,735 à 113,64 cm³ (1 cuillère à thé à 0,5 tasse) de crème de tartre et de 4,735 à 113,64 cm³ (1 cuillère à thé à 0,5 tasse) de fécule de maïs, le produit, la crème de tartre et la fécule de maïs étant dans un rapport volumétrique d'environ 2:1:1 ;
- un agent anti-moisissure de qualité alimentaire ;
- de 1,77 à 14,20 cm³ (0,125 à 1 cuillère à soupe) d'un agent anti-collant à base de silicone liquide de qualité alimentaire ;
- de 1,77 à 28,41 cm³ (0,125 à 2 cuillères à soupe) d'un agent humidifiant à base de lanoline.

4. Composition telle que définie à la revendication 3, caractérisée en ce que l'agent anti-collant à base de silicone liquide est choisi dans le groupe constitué par les diméthyl polysiloxanes fluides.

5. Composition telle que définie à la revendication 3, caractérisée en ce que l'agent humidifiant est la lanoline et en ce que cette dernière joue en outre de rôle d'un agent épaississant.

6. Composition telle que définie à la revendication 4, caractérisée en ce que l'agent humidifiant est la lanoline et en ce que cette dernière joue en outre le rôle d'un agent épaississant.

7. Composition telle que définie à la revendication 3, 4, 5 ou 6, caractérisée en ce que l'agent anti-moisissure est le benzoate de sodium.

8. Composition telle que définie à la revendication 7, caractérisée en ce que le benzoate de sodium est utilisé en quantité d'environ 1,18 cm³ (0,25 cuillère à thé).

9. Composition telle que définie à la revendication 3, caractérisée en ce que le mélange à cuire comprend :
- 227,28 cm³ (1 tasse) de farine de grain, 86,82 cm³ (0,25 tasse) de sel et 227,28 cm³ (1 tasse) d'eau ;
- un agent épaississant comprenant de 56,82 cm³ (0,25 tasse) d'un produit renfermant 80 % de gluten et 20 % de farine de grain, 28,41 cm³ (2 cuillères à soupe) de crème de tartre et 28,41 cm³ (2 cuillères à soupe) de fécule de maïs ;
- 1,18 cm³ (0,25 cuillère à thé) de benzoate de sodium comme agent anti-moisissure ;
- 2,36 cm³ (0,5 cuillère à thé) d'un agent anti-collant à base de silicone liquide de qualité alimentaire;
- 4,73 cm³ (1 cuillère à thé) de lanoline comme agent humidifiant.

10. Composition telle que définie à la revendication 9, caractérisée en ce que le mélange contient en outre un additif usuel pour pâte à modeler choisi dans le groupe constitué par les colorants, les parfums et les huiles essentielles.

11. Procédé pour la préparation d'une composition de pâte à modeler telle que définie à la revendication 1, caractérisé en ce que :
i) on réalise un mélange comprenant :
- de la farine de grain, de l'eau et du sel ;
- un agent épaississant comprenant un mélange d'un produit renfermant 80 % de gluten et 20 % de farine de grain, de fécule de maïs et de crème de tartre dans un rapport volumétrique d'environ 2:1:1 ;
- un agent anti-moisissure de qualité alimentaire ;
- un agent anti-collant à base de silicone liquide de qualité alimentaire ; et
- un agent humidifiant à base de lanoline ;
il) on cuit le mélange obtenu de l'étape i) ;
iii) on laisse refroidir la pâte obtenue de l'étape ii) ;
iv) on pétrit la pâte obtenue de l'étape iii).

12. Procédé selon la revendication 11, caractérisé en ce que préalablement à la réalisation du mélange devant être soumis à une cuisson, lesdits ingrédients sont d'abord réunis en un premier et un second prémélanges, le premier prémélange comprenant tous les ingrédients secs, le second prémélange comprenant tous les ingrédients non contenus dans le premier prémélange, puis les deux prémélanges sont ensuite réunis pour former ledit mélange devant être ensuite soumis à la cuisson.

13. Procédé selon la revendication 12, caractérisé en que le mélange à cuire comprend :
- de 113,64 à 397,74 cm³ (0,5 à 1,75 tasse) de farine de grain, de 75,00 à 170,46 cm³ (0,33 à 0,75 tasse) de sel et de 113,64 à 340,92 cm³ (0,5 à 1,50 tasse) d'eau ;
- un agent épaississant comprenant de 28,41 à 170,46 cm³ (2 cuillères à soupe à 0,75 tasse) d'un produit renfermant 80 % de gluten et 20 % de farine de grain, de 4,735 à 113,64 cm³ (1 cuillère à thé à 0,5 tasse) de crème de tartre et de 4,735 à 113,64 cm³ (1 cuillère à thé à 0,5 tasse) de fécule de maïs, le produit, la crème de tartre et la fécule de maïs étant dans un rapport volumétrique d'environ 2:1:1 ;
- un agent anti-moisissure de qualité alimentaire ;
- de 1,77 à 14,20 cm³ (0,125 à 1 cuillère à soupe) d'un agent anti-collant à base de silicone liquide de qualité alimentaire ;
- de 1,77 à 28,41 cm³ (0,125 à 2 cuillères à soupe) d'un agent humidifiant à base de lanoline.

14. Procédé selon la revendication 13, caractérisé en ce que l'agent anti-collant à base de silicone liquide est choisi dans le groupe constitué par les diméthyl polysiloxanes.

15. Procédé selon la revendication 13, caractérisé en ce que l'agent humidifiant est la lanoline et en ce que cette dernière joue en outre le rôle d'un agent épaississant.

16. Procédé selon la revendication 14, caractérisé en ce que l'agent humidifiant est la lanoline et en ce que cette dernière joue en outre le rôle d'un agent épaississant.

17. Procédé selon la revendication 13, 14, 15 ou 16, caractérisé en ce que l'agent anti-moisissure est le benzoate de sodium.

18. Procédé selon la revendication 17, caractérisé en ce que le benzoate de sodium est utilisé en quantité d'environ 1,18 cm³ (0,25 cuillère à thé).

19. Procédé selon la revendication 13, caractérisé en ce que le mélange à cuire comprend :
- 227,28 cm³ (1 tasse) de farine de grain, 56,82 cm³ (0,25 tasse) de sel et 227,28 cm³ (1 tasse) d'eau ;
- un agent épaississant comprenant 56,82 cm³ (0,25 tasse) d'un produit renfermant 80 % de gluten et 20 % de farine de grain, 28,41 cm³ (2 cuillères à soupe) de crème de tartre et 28,41 cm³ (2 cuillères à soupe) de fécule de maïs ;
- 1,18 cm³ (0,25 cuillère à thé) de benzoate de sodium comme agent anti-moisissure ;
- 2,36 cm³ (0,5 cuillère à thé) d'un agent anti-collant à base de silicone liquide de qualité alimentaire.
- 4,73 cm³ (1 cuillère à thé) de lanoline comme agent humidifiant.

20. Procédé selon la revendication 19, caractérisé en ce que le mélange contient en outre un additif usuel pour pâte à modeler choisi dans le groupe constitué par les colorants, les parfums et les huiles essentielles.

## Patentansprüche

1. Modelliermasse, dadurch gekennzeichnet, daß man sie erhält durch Härtung eines Gemischs in der Wärme, das
- Getreidemehl, Wasser und Salz;
- ein Verdickungsmittel, das ein Gemisch aus einem Produkt, das 80% Gluten und 20% Getreidemehl umfaßt, Maisstärke und Kaliumhydrogentartrat in einem Volumenverhältnis von etwa 2:1:1 umfaßt;
- ein Mittel gegen Schimmelbefall mit Nahrungsmittelqualität;
- ein flüssiges Antiklebemittel auf Silikonbasis mit Nahrungsmittelqualität; und
- ein Feuchthaltemittel auf Lanolinbasis;
umfaßt, wobei die Bestandteile vor der Härtung miteinander gemischt werden, und Abkühlen und Kneten der erhaltenen Masse.

2. Masse gemäß Anspruch 1, dadurch gekennzeichnet, daß die Bestandteile zuerst zu einer ersten und einer zweiten Vormischung vereinigt werden, wobei die erste Vormischung alle trockenen Bestandteile umfaßt und die zweite Vormischung alle Bestandteile umfaßt, die nicht in der ersten Vormischung enthalten sind, wobei die beiden Vormischungen anschließend unter Bildung des Gemischs, das danach der Härtung unterzogen werden soll, vereinigt werden.

3. Masse gemäß Anspruch 2, dadurch gekennzeichnet, daß das zu härtende Gemisch umfaßt:
- 113,64 bis 397,74 cm³ (0,5 bis 1,75 Tassen) Getreidemehl, 75,00 bis 170,46 cm³ (0,33 bis 0,75 Tassen) Salz und 113,64 bis 340,92 cm³ (0,5 bis 1,50 Tassen) Wasser;
- ein Verdickungsmittel, das 28,41 bis 170,46 cm³ (2 Eßlöffel bis 0,75 Tassen) eines Produkts, das 80% Gluten und 20% Getreidemehl umfaßt, 4,735 bis 113,64 cm³ (1 Teelöffel bis 0,5 Tassen) Kaliumhydrogentartrat und 4,735 bis 113,64 cm³ (1 Teelöffel bis 0,5 Tassen) Maisstärke umfaßt, wobei das Produkt, das Kaliumhydrogentartrat und die Maisstärke in einem Volumenverhältnis von etwa 2:1:1 vorhanden sind;
- ein Mittel gegen Schimmelbefall mit Nahrungsmittelqualität;
- 1,77 bis 14,20 cm³ (0,125 bis 1 Eßlöffel) eines flüssigen Antiklebemittels auf Silikonbasis mit Nahrungsmittelqualität;
- 1,77 bis 28,41 cm³ (0,125 bis 2 Eßlöffel) eines Feuchthaltemittels auf Lanolinbasis.

4. Masse gemäß Anspruch 3, dadurch gekennzeichnet, daß das flüssige Antiklebemittel auf Silikonbasis aus der Gruppe ausgewählt ist, die aus flüssigen Dimethylpolysiloxanen besteht.

5. Masse gemäß Anspruch 3, dadurch gekennzeichnet, daß es sich bei dem Feuchthaltemittel um Lanolin handelt und daß letzteres außerdem die Rolle eines Verdickungsmittels spielt.

6. Masse gemäß Anspruch 4, dadurch gekennzeichnet, daß es sich bei dem Feuchthaltemittel um Lanolin handelt und daß letzteres außerdem die Rolle eines Verdickungsmittels spielt.

7. Masse gemäß Anspruch 3, 4, 5 oder 6, dadurch gekennzeichnet, daß es sich bei dem Mittel gegen Schimmelbefall um Natriumbenzoat handelt.

8. Masse gemäß Anspruch 7, dadurch gekennzeichnet, daß das Natriumbenzoat in einer Menge von etwa 1,18 cm³ (0,25 Teelöffel) verwendet wird.

9. Masse gemäß Anspruch 3, dadurch gekennzeichnet, daß das zu härtende Gemisch umfaßt:
- 227,28 cm³ (1 Tasse) Getreidemehl, 56,82 cm³ (0,25 Tassen) Salz und 227,28 cm³ (1 Tasse) Wasser;
- ein Verdickungsmittel, das 56,82 cm³ (0,25 Tassen) eines Produkts, das 80% Gluten und 20% Getreidemehl umfaßt, 28,41 cm³ (2 Eßlöffel) Kaliumhydrogentartrat und 28,41 cm³ (2 Eßlöffel) Maisstärke umfaßt;
- 1,18 cm³ (0,25 Teelöffel) Natriumbenzoat als Mittel gegen Schimmelbefall;
- 2,36 cm³ (0,5 Teelöffel) eines flüssigen Antiklebemittels auf Silikonbasis mit Nahrungsmittelqualität;
- 4,73 cm³ (1 Teelöffel) Lanolin als Feuchthaltemittel.

10. Masse gemäß Anspruch 9, dadurch gekennzeichnet, daß das Gemisch außerdem ein übliches Additiv für Modelliermasse enthält, das aus der Gruppe ausgewählt ist, die aus Färbemitteln, Duftstoffen und ätherischen Ölen besteht.

11. Verfahren zur Herstellung einer Modelliermasse, wie sie in Anspruch 1 definiert ist, dadurch gekennzeichnet, daß man
i) ein Gemisch herstellt, das
- Getreidemehl, Wasser und Salz;
- ein Verdickungsmittel, das ein Gemisch aus einem Produkt, das 80% Gluten und 20% Getreidemehl umfaßt, Maisstärke und Kaliumhydrogentartrat in einem Volumenverhältnis von etwa 2:1:1 umfaßt;
- ein Mittel gegen Schimmelbefall mit Nahrungsmittelqualität;
- ein flüssiges Antiklebemittel auf Silikonbasis mit Nahrungsmittelqualität; und
- ein Feuchthaltemittel auf Lanolinbasis;
umfaßt;
ii) das in Schritt i) erhaltene Gemisch in der Wärme härtet;
iii) die in Schritt ii) erhaltene Masse abkühlen läßt;
iv) die in Schritt iii) erhaltene Masse knetet.

12. Verfahren gemäß Anspruch 11, dadurch gekennzeichnet, daß die Bestandteile vor der Herstellung des Gemischs, das einer Härtung unterzogen werden soll, zuerst zu einer ersten und einer zweiten Vormischung vereinigt werden, wobei die erste Vormischung alle trockenen Bestandteile umfaßt und die zweite Vormischung alle Bestandteile umfaßt, die nicht in der ersten Vormischung enthalten sind, und die beiden Vormischungen anschließend unter Bildung des Gemischs, das danach der Härtung unterzogen werden soll, vereinigt werden.

13. Verfahren gemäß Anspruch 12, dadurch gekennzeichnet, daß das zu härtende Gemisch umfaßt:
- 113,64 bis 397,74 cm³ (0,5 bis 1,75 Tassen) Getreidemehl, 75,00 bis 170,46 cm³ (0,33 bis 0,75 Tassen) Salz und 113,64 bis 340,92 cm³ (0,5 bis 1,50 Tassen) Wasser;
- ein Verdickungsmittel, das 28,41 bis 170,46 cm³ (2 Eßlöffel bis 0,75 Tassen) eines Produkts, das 80% Gluten und 20% Getreidemehl umfaßt, 4,735 bis 113,64 cm³ (1 Teelöffel bis 0,5 Tassen) Kaliumhydrogentartrat und 4,735 bis 113,64 cm³ (1 Teelöffel bis 0,5 Tassen) Maisstärke umfaßt, wobei das Produkt, das Kaliumhydrogentartrat und die Maisstärke in einem Volumenverhältnis von etwa 2:1:1 vorhanden sind;
- ein Mittel gegen Schimmelbefall mit Nahrungsmittelqualität;
- 1,77 bis 14,20 cm³ (0,125 bis 1 Eßlöffel) eines flüssigen Antiklebemittels auf Silikonbasis mit Nahrungsmittelqualität;
- 1,77 bis 28,41 cm³ (0,125 bis 2 Eßlöffel) eines Feuchthaltemittels auf Lanolinbasis.

14. Verfahren gemäß Anspruch 13, dadurch gekennzeichnet, daß das flüssige Antiklebemittel auf Silikonbasis aus der Gruppe ausgewählt ist, die aus Dimethylpolysiloxanen besteht.

15. Verfahren gemäß Anspruch 13, dadurch gekennzeichnet, daß es sich bei dem Feuchthaltemittel um Lanolin handelt und daß letzteres außerdem die Rolle eines Verdickungsmittels spielt.

16. Verfahren gemäß Anspruch 14, dadurch gekennzeichnet, daß es sich bei dem Feuchthaltemittel um Lanolin handelt und daß letzteres außerdem die Rolle eines Verdickungsmittels spielt.

17. Verfahren gemäß Anspruch 13, 14, 15 oder 16, dadurch gekennzeichnet, daß es sich bei dem Mittel gegen Schimmelbefall um Natriumbenzoat handelt.

18. Verfahren gemäß Anspruch 1, dadurch gekennzeichnet, daß das Natriumbenzoat in einer Menge von etwa 1,18 cm³ (0,25 Teelöffel) verwendet wird.

19. Verfahren gemäß Anspruch 13, dadurch gekennzeichnet, daß das zu härtende Gemisch umfaßt:
- 227,28 cm³ (1 Tasse) Getreidemehl, 56,82 cm³ (0,25 Tassen) Salz und 227,28 cm³ (1 Tasse) Wasser;
- ein Verdickungsmittel, das 56,82 cm³ (0,25 Tassen) eines Produkts, das 80% Gluten und 20% Getreidemehl umfaßt, 28,41 cm³ (2 Eßlöffel) Kaliumhydrogentartrat und 28,41 cm³ (2 Eßlöffel) Maisstärke umfaßt;
- 1,18 cm³ (0,25 Teelöffel) Natriumbenzoat als Mittel gegen Schimmelbefall;
- 2,36 cm³ (0,5 Teelöffel) eines flüssigen Antiklebemittels auf Silikonbasis mit Nahrungsmittelqualität;
- 4,73 cm³ (1 Teelöffel) Lanolin als Feuchthaltemittel.

20. Verfahren gemäß Anspruch 19, dadurch gekennzeichnet, daß das Gemisch außerdem ein übliches Additiv für Modelliermasse enthält, das aus der Gruppe ausgewählt ist, die aus Färbemitteln, Duftstoffen und ätherischen Ölen besteht.

## Claims

1. A modelling composition characterised in that it results from the cooking of a mixture comprising:
- grain flour, water and salt;
- a thickening agent comprising a mixture of a product containing 80 % of gluten and 20 % of grain flour, cornstarch and cream of tartar in a volumetric ratio of 2:1:1;
- a food grade anti-mould agent;
- a food grade liquid silicone based anti-sticking agent; and
- a lanoline based humidifying agent;
said ingredients being mixed together prior to being cooked;
and from the cooling and the kneading of the dough obtained.

2. A composition according to claim 1, characterised in that the ingredients are gathered in a first and a second pre-mixes, the first pre-mix comprising all dry ingredients, the second pre-mix comprising all ingredients not contained in the first pre-mix, both pre-mixes being then joined together to form the mixture intended to be submitted to the cooking.

3. A modelling composition according to claim 2, characterised in that the mixture to be cooked comprises:
- from 113.64 to 397.74 cm³ (0.5 to 1.75 cup) of grain flour, from 75.00 to 170.46 cm³ (0.33 to 0.75 cup) of salt and from 113.64 to 340.92 cm³ (0.5 to 1.50 cup) of water;
- a thickening agent consisting of from 28.41 to 170.46 cm³ (2 tablespoons to 0.75 cup) of a product comprising 80 % of gluten and 20 % of grain flour, from 4.735 to 113.64 cm³ (1 teaspoon to 0.5 cup) of cream of tartar and from 4.735 to 113.64 cm³ (1 teaspoon to 0.5 cup) of cornstarch, the product, the cream of tartar and the cornstarch being in a volumetric ratio of about 2:1:1;
- a food grade anti-mould agent;
- from 1.77 to 14.20 cm³ (0.125 to 1 tablespoon) of a food grade liquid silicone based anti-sticking agent;
- from 1.77 to 28.41 cm³ (0.125 to 2 tablespoons) of a lanoline based humidifying agent.

4. A composition according to claim 3, characterised in that the liquid silicone based anti-sticking agent is selected from the group comprised of fluid dimethyl polysiloxanes.

5. A composition according to claim 3, characterised in that the humidifiying agent is lanoline and in that the latter also serves as a thickening agent.

6. A composition according to claim 4, characterised in that the humidifiying agent is lanoline and in that the latter also serves as a thickening agent.

7. A composition according to claim 3, 4, 5 or 6, characterised in that the anti-mould agent is sodium benzoate.

8. A composition according to claim 7, characterised in that the sodium benzoate is used in an amount of about 1.18 cm³ (0.25 teaspoon).

9. A composition according to claim 3, characterized in that the mixture to be cooked comprises:
- 227.28 cm³ (1 cup) of grain flour, 56.82 cm³ (0.25 cup) of salt and 227.28 cm³ (1 cup) of water;
- a thickening agent comprising 56.82 cm³ (0.25 cup) of a product comprising 80 % of gluten and 20 % of grain flour, 28.41 cm³ (2 tablespoons) of cream of tartar and 28.41 cm³ (2 tablespoons) of cornstarch;
- 1.18 cm³ (0.25 teaspoon) of sodium benzoate as anti-mould agent;
- 2.36 cm³ (0.5 teaspoon) of a food grade liquid silicone based anti-sticking agent;
- 4.73 cm³ (1 teaspoon) of lanoline as humidifying agent.

10. A composition according to claim 9, characterised in that the mixture further contains an usual additive for modelling composition selected from the group consisting of dyes, perfumes and essential oils.

11. Process for the preparation of a modelling composition as defined in claim 1, characterised in that:
i) we realise a mixture comprising:
- grain flour, water and salt;
- a thickening agent consisting of a mixture of a product comprising 80 % of gluten and 20 % of grain flour, cornstarch and cream of tartar in a volumetric ratio of about 2:1:1;
- a food grade anti-mould agent;
- a food grade liquid silicone based anti-sticking agent; and
- a lanoline based humidifying agent;
ii) we cook the mixture obtained from step i);
iii) we allow the resulting dough obtained from step ii) to cool;
iv) we knead the dough obtained from step iii).

12. Process according to claim 11, characterised in that, prior to the realisation of the mixture to be cooked, said ingredients are gathered in a first and second pre-mixes, the first pre-mix comprising all dry ingredients, the second pre-mix comprising all ingredients not contained in the first pre-mix, both pre-mixes being then joined together to form a mixture intended to be submitted to the cooking.

13. Process according to claim 12, characterised in that the mixture to be cooked comprises:
- from 113.64 to 397.74 cm³ (0.5 to 1.75 cup) of grain flour, from 75.00 to 170.46 cm³ (0.33 to 0.75 cup) of salt and from 113.64 to 340.92 cm³ (0.5 to 1.50 cup) of water;
- a thickening agent consisting of from 28.41 to 170.46 cm³ (2 tablespoons to 0.75 cup) of a product comprising 80 % of gluten and 20 % of grain flour, from 4.735 to 113.64 cm³ (1 teaspoon to 0.5 cup) of cream of tartar and from 4.735 to 113.64 cm³ (1 teaspoon to 0.5 cup) of cornstarch, the product, the cream of tartar and the cornstarch being in a volumetric ratio of about 2:1:1;
- a food grade anti-mould agent;
- from 1.77 to 14.20 cm³ (0.125 to 1 tablespoon) of a food grade liquid silicone based anti-sticking agent;
- from 1.77 to 28.41 cm³ (0.125 to 2 tablespoons) of a lanoline based humidifying agent.

14. Process according to claim 13, characterised in that the liquid silicone based anti-sticking agent is selected from the group comprised of dimethyl polysiloxanes.

15. Process according to claim 13, characterised in that the humidifiying agent is lanoline and in that the latter also serves as a thickening agent.

16. Process according to claim 14, characterised in that the humidifiying agent is lanoline and in that the latter also serves as a thickening agent.

17. Process according to claim 13, 14, 15 or 16, characterised in that the anti-mould agent is sodium benzoate.

18. Process according to claim 17, characterised in that the sodium benzoate is used in an amount of about 1.18 cm³ (0.25 teaspoon).

19. Process according to claim 13, characterised in that the mixture to be cooked comprises:
- 227.28 cm³ (1 cup) of grain flour, 56.82 cm³ (0.25 cup) of salt and 227.28 cm³ (1 cup) of water;
- a thickening agent comprising 56.82 cm³ (0.25 cup) of a product comprising 80 % of gluten and 20 % of grain flour, 28.41 cm³ (2 tablespoons) of cream of tartar and 28.41 cm³ (2 tablespoons) of cornstarch;
- 1.18 cm³ (0.25 teaspoon) of sodium benzoate as anti-mould agent;
- 2.36 cm³ (0.5 teaspoon) of a dimethyl polysiloxane anti-sticking agent;
- 4.73 cm³ (1 teaspoon) of lanoline as humidiying agent.

20. Process according to claim 19, characterised in that the mixture further contains an usual additive for modelling composition selected from the group consisting of dyes, perfumes and essential oils.
